# EUROPEAN PATENT SPECIFICATION

(11) **EP 1 568 604 B1**
(45) Date of publication and mention of the grant of the patent: **29.08.2007**
(21) Application number: 05101148.4
(22) Date of filing: 16.02.2005
(51) Int. Cl.: B64C 5/02, B64C 5/08, B64C 23/06

(54) **Helicopter**
Hubschrauber
Hélicoptère

(30) Priority: 27.02.2004 IT TO20040118
(43) Date of publication of application: 31.08.2005
(73) Proprietor: Agusta S.p.A., 21017 Samarate (IT)
(72) Inventor: Pancotti, Santino, 21013, Gallarate (IT)
(74) Representative: Jorio, Paolo

(56) References cited:
- EP-A- 0 867 364
- US-A- 4 382 569
- US-A- 5 211 538
- US-A- 6 126 113

## Description

The present invention relates to a helicopter of the type comprising a fuselage; a main rotor fitted to the top of a central portion of the fuselage; a secondary tail rotor; and two rear wings extending from opposite sides of the tail portion of the fuselage.

Within the industry, improvements are continually being made, especially as regards aerodynamic efficiency and flight stability in various operating conditions. As is known, aerodynamic efficiency can be improved by increasing lift or reducing the aerodynamic resistance of all the helicopter surfaces; and particular care is normally taken to avoid a significant increase in weight without a corresponding increase in lift.

US-A-5211538 discloses a helicopter as defined in the preamble of claim 1.

It is an object of the present invention to provide a helicopter designed to meet the above requirements in a straightforward, low-cost manner.

This object is obtained by a helicopter according to claim 1.

A preferred, non-limiting embodiment of the present invention will be described by way of example with reference to the accompanying drawings, in which:
Figure 1 shows a view in perspective of a helicopter in accordance with the present invention;
Figure 2 shows a top plan view of the tail portion of the Figure 1 helicopter illustrating the dynamic performance of the helicopter when the flight direction coincides with the apparent incident wind direction;
Figure 3 shows a top plan view of the tail portion of the Figure 1 helicopter illustrating the dynamic performance of the helicopter when the flight direction does not coincide with the apparent incident wind direction;
Figures 4 and 5 show larger-scale views in perspective illustrating the aerodynamic performance of end portions of helicopter rear wings according to known technology and in accordance with the teachings of the present invention respectively.

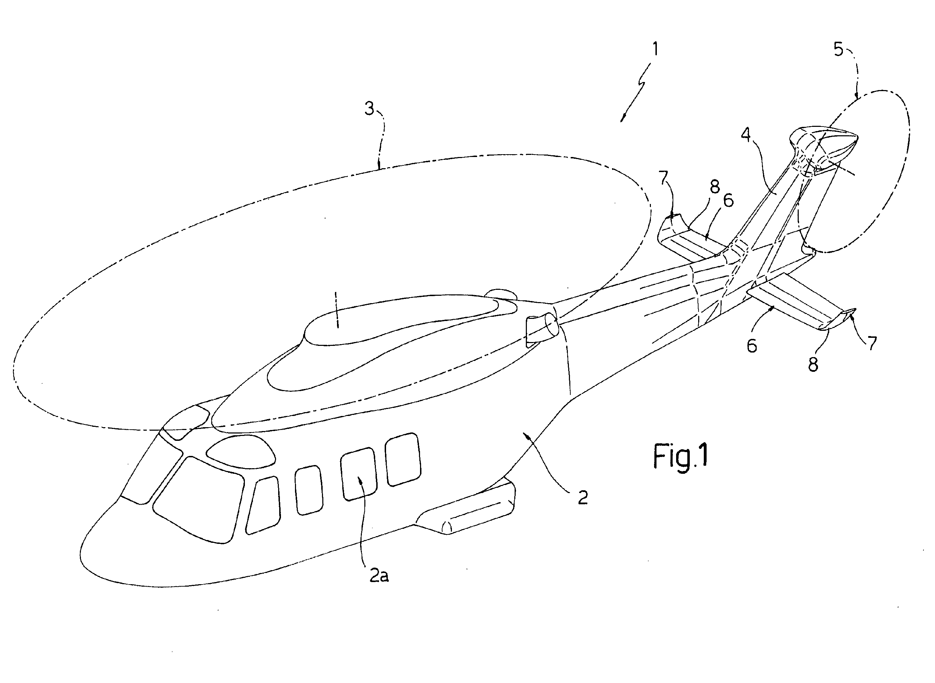

Number 1 in Figure 1 indicates as a whole a helicopter comprising a fuselage 2 defining a front cockpit 2a; a main rotor 3 fitted to the top of fuselage 2; a rudder 4 projecting from the tail end of fuselage 2, and the top end portion of which is fitted with a secondary rotor 5; and two rear wings 6 projecting from opposite sides of fuselage 2, at and substantially perpendicular to rudder 4.

An important aspect of the present invention is that each rear wing 6 comprises a winglet 7 projecting transversely from a free end of wing 6.

More specifically, each winglet 7 comprises a flat underside 10 facing rudder 4; and an opposite convex topside 11. Each winglet 7 tapers in cross section towards its free end, and is connected to relative wing 6 by a curved portion 8.

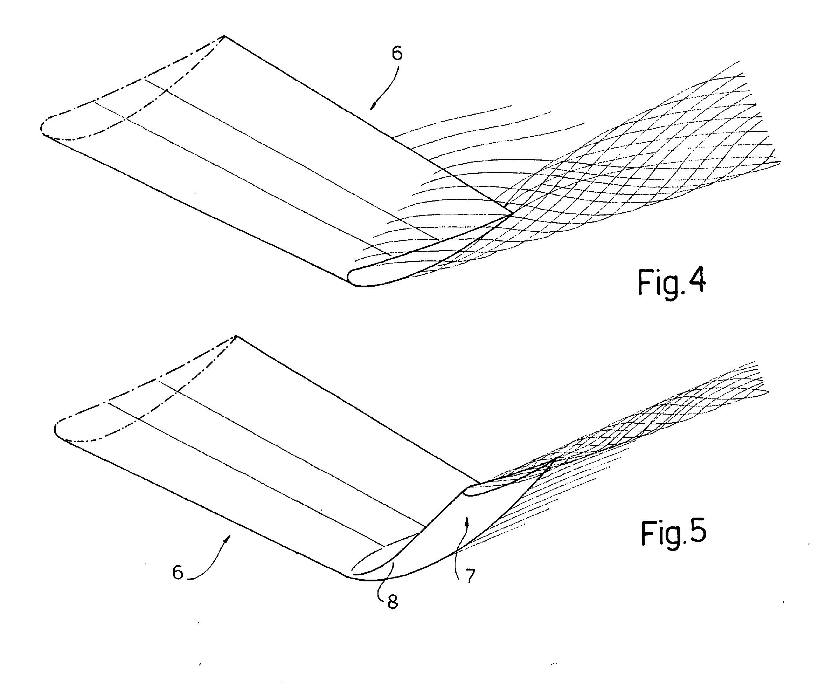

According to a known effect in aeronautics, winglets 7 provide for substantially reducing aerodynamic resistance produced by end vortices induced by the big pressure difference between underside and topside of wings 6. More specifically, Figures 4 and 5 show the airflow surface current lines on rear wings 6 without and with winglets 7 respectively. As can be seen from a comparison of Figures 4 and 5, in the case of rear wings 6 with winglets 7, the surface current lines adhere to the body of wing 6 to produce a more contained end vortex.

The aerodynamic action of winglets 7 and their location with respect to the barycentre G of helicopter 1, normally located at cockpit 2a, also provide for additional advantages in terms of improved lateral-directional stability of helicopter 1.

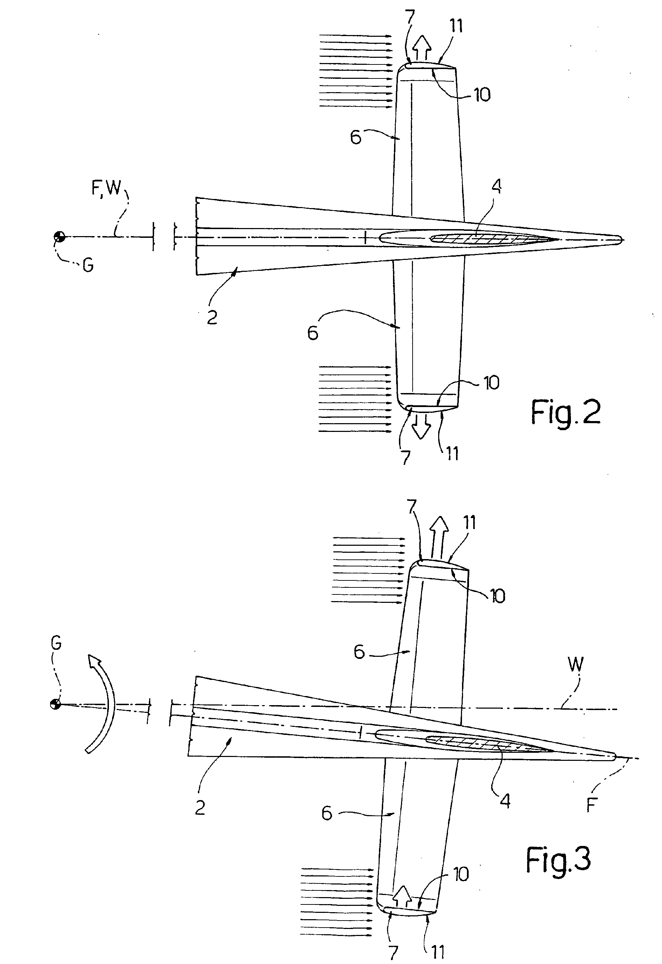

Figures 2 and 3 show the dynamic performance of helicopter 1 - of which are shown schematically a tail portion with rear wings 6, and barycentre G - relative to two different flight operating conditions characterized by two parameters : flight direction F, and apparent incident wind direction W.

When flight direction F coincides with apparent incident wind direction W (Figure 2), the aerodynamic action on winglets 7 gives rise to forces of like modulus and direction but opposite in sense, thus producing a zero resultant moment with respect to barycentre G of helicopter 1.

When flight direction F forms an angle with apparent incident wind direction W (Figure 3), winglets 7 give rise to forces of different modulus and of like direction and sense, so that the resultant of the forces generated by winglets 7 with respect to barycentre G of helicopter 1 produces a stabilizing moment, i.e. which tends to restore helicopter 1 to apparent incident wind direction W.

Simply providing two winglets 7 projecting from the free ends of wings 6 therefore not only provides for substantially reducing aerodynamic resistance on wings 6, thus improving flight efficiency, but also for improving the lateral-directional stability of helicopter 1.

Clearly, changes may be made to helicopter 1 as described and illustrated herein without, however, departing from the scope of the accompanying Claims.

## Claims

1. A helicopter (1) comprising a fuselage (2), and two rear wings (6) located on opposite sides of said fuselage (2); said wing (6) having a winglet (7) projecting transversely from a free end of the wing (6); **characterized in that** said winglet (7) projects completely from an unique side of said wing (6).

2. A helicopter as claimed in Claim 1, **characterized in that** said winglets (7) extend perpendicularly from, and are connected to, the respective rear wings (6).

3. A helicopter as claimed in Claim 1, **characterized in that** said winglets (7) extend upwards.

## Patentansprüche

1. Hubschrauber (1), welcher einen Rumpf (2) und zwei an gegenüberliegenden Seiten des Rumpfs (2) angeordnete rückwärtige Höhenflossen (6) aufweist, wobei rechtwinklig vom freien Ende der Höhenflossen (6) eine Stabilisierungsflosse (7) vortritt,
**dadurch gekennzeichnet,**
**dass** besagte Stabilisierungsflosse (7) vollständig von einer einzigen Seite der besagten Höhenflosse (6) vortritt.

2. Hubschrauber nach Anspruch 1, **dadurch gekennzeichnet, dass** besagte Stabilisierungsflosse (7) rechtwinklig von den rückwärtigen Höhenflossen (6) vortreten und mit der jeweils zugeordneten Höhenflosse (6) verbunden sind.

3. Hubschrauber nach Anspruch 1, **dadurch gekennzeichnet, dass** die besagten Stabilisierungsflossen (7) sich in Aufwärtsrichtung erstrecken.

## Revendications

1. Un hélicoptère (1) comprenant un fuselage (2) et deux ailes arrières (6) disposées sur des côtés opposés dudit fuselage (2) ; ladite aile (6) ayant une ailette (7) se projetant transversalement à partir d'une extrémité libre de l'aile (6) ; **caractérisé en ce que** ladite ailette (7) se projette totalement à partir d'un côté unique de ladite aile (6).

2. Un hélicoptère selon la revendication 1, **caractérisé en ce que** lesdites ailettes (7) s'étendent perpendiculairement à partir de leurs ailes arrière respectives (6) et y sont reliées.

3. Un hélicoptère selon la revendication 1, **caractérisé en ce que** lesdites ailettes (7) s'étendent vers le haut.
